# EUROPEAN PATENT APPLICATION

(11) **EP 4 572 266 A1**
(43) Date of publication of application: **18.06.2025**
(21) Application number: 23856157.5
(22) Date of filing: 26.05.2023
(51) Int. Cl.: H04L 27/00

(54) **DATA TRANSMISSION METHOD AND APPARATUS**

(30) Priority: 26.08.2022 WO PCT/CN2022/115264
(71) Applicant: Huawei Technologies Co., Ltd., Shenzhen, Guangdong 518129 (CN)
(72) Inventor: LUO, Yilin, Shenzhen, Guangdong 518129 (CN); WU, Dongxing, Shenzhen, Guangdong 518129 (CN)
(74) Representative: Goddar, Heinz J.
(86) International application number: PCT/CN2023/096565
(87) International publication number: WO 2024/041065

(57) **Abstract**

This application provides a data transmission method and apparatus, and relates to the field of communication technologies, to improve data transmission efficiency. The method includes: obtaining first valid data and second valid data, where the first valid data includes first data from a first bus channel, and the second valid data includes second data from a second bus channel; determining a first payload based on the first valid data and the second valid data, where the first payload includes the first valid data, padding data, and at least a part of the second valid data that are spliced successively; and encapsulating and sending the first payload. In this process, the first payload includes the first valid data, the padding data, and the at least a part of the second valid data, so that there is no idle (remaining) bit width in the first payload. When the first payload is encapsulated and sent to a receiver-side die, data transmission efficiency is improved.

## Description

### TECHNICAL FIELD

This application relates to the field of communication technologies, and in particular, to a data transmission method and apparatus.

### BACKGROUND

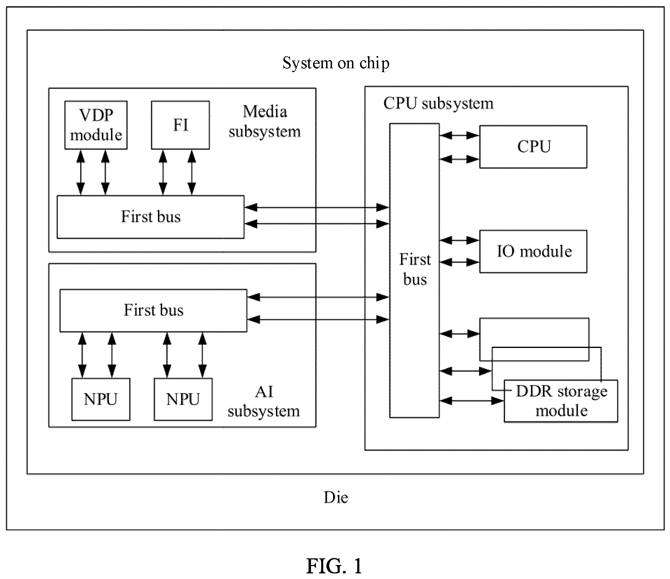

A system on chip (system on chip, SoC) implements interconnection between internal subsystems through an on-chip bus. For example, the on-chip bus may be an advanced extensible interface (advanced extensible interface, AXI) bus, an advanced extensible interface coherent extension (advanced extensible interface coherent extension, ACE) bus, or a coherence hub interface (coherent hub interface, CHI) bus. FIG. 1 is a diagram of a structure of an SoC. The SoC includes a media subsystem, a central processing unit (central processing unit, CPU) subsystem, and an artificial intelligence (artificial intelligence, AI) subsystem. The media subsystem includes a video display processor (video display processor, VDP) module, a communication module FI, and a first bus. The CPU subsystem includes a CPU, an IO module, a plurality of double data rate (double data rate, DDR) storage modules, and a first bus. The AI subsystem includes a plurality of network processing units (network processing units, NPU) and a first bus. The first bus may be any one of the foregoing on-chip buses. Specifically, each module or processor in the media subsystem and the AI subsystem is interconnected to the first bus in the CPU subsystem through the first bus in the media subsystem and the first bus in the AI subsystem, to implement data transmission between a plurality of subsystems. The SoC shown in FIG. 1 is integrated on a die (Die). For example, the AI subsystem includes two NPUs, and the CPU subsystem includes three DDR storage modules.

Currently, when the media subsystem, the CPU subsystem, and the AI subsystem shown in FIG. 1 are integrated on different dies, a plurality of dies may be spliced through a chiplet (chiplet) interface. This implements interconnection between the plurality of dies. However, how to implement data transmission between the different dies with high transmission efficiency through the chiplet interface becomes an urgent problem to be resolved.

### SUMMARY

This application provides a data transmission method and apparatus, and relates to the field of communication technologies, to improve data transmission efficiency. The data transmission method is applied to a system on chip. The system on chip includes a plurality of dies that are coupled to each other. The plurality of dies include a first die and a second die. The first die includes a first chiplet interface. The second die includes a second chiplet interface. The first die and the second die may transmit data through the first chiplet interface and the second chiplet interface. For the first die or the second die, the die may be a receiver-side die, or may be a transmitter-side die.

To achieve the foregoing objective, this application uses the following technical solutions.

According to a first aspect, a data transmission method is provided for a transmitter-side die, where the method includes: obtaining first valid data and second valid data, where the first valid data includes first data from a first bus channel, and the second valid data includes second data from a second bus channel; determining a first payload based on the first valid data and the second valid data, where the first payload includes the first valid data, padding data, and at least a part of the second valid data that are spliced successively; and encapsulating and sending the first payload.

In the foregoing technical solution, the first valid data and the at least a part of the second valid data are spliced into the first payload, where the first payload includes the first valid data, the padding data, and the at least a part of the second valid data. The first payload is encapsulated and then sent to a receiver-side die. In other words, the first valid data and the second valid data are spliced into one payload for sending. In addition, the first payload includes the first valid data, the padding data, and the at least a part of the second valid data. In other words, there is no idle (remaining) bit width in the first payload, that is, there is no idle bit in the first payload. When the first payload is encapsulated and sent, data transmission efficiency is improved.

In a possible implementation of the first aspect, a sum of a bit width of the first valid data and a bit width of the padding data is equal to an integer multiple of an alignment bit width, where the alignment bit width may be a sliding window bit width, and a window size of the sliding window bit width may be fixed. For example, the alignment bit width may be a sliding window bit width when the first payload is split, and the sliding window bit width may also be referred to as a sliding window reading bit width. In the foregoing possible implementation, a start bit of the first valid data in the first payload is 0 bits. The sum of the bit width of the first valid data and the bit width of the padding data is equal to an integer multiple of the alignment bit width, so that a start bit of the second valid data in the first payload is also equal to an integer multiple of the alignment bit width. The first payload is encapsulated and then sent to the receiver-side die. When the receiver-side die splits the first payload, the receiver-side die performs sliding window reading on the first payload based on the alignment bit width (fixed bits) each time, to quickly determine the first valid data and the at least a part of the second valid data in the first payload. In comparison with a conventional case in which the receiver-side die performs sliding window reading on the first payload based on one bit each time, this reduces a processing delay of the receiver-side die, and improves processing efficiency.

In a possible implementation of the first aspect, the bit width of the padding data is less than the alignment bit width. In the foregoing possible implementation, the bit width of the padding data is less than the alignment bit width. The padding data is spliced after the first valid data, so that the sum of the bit width of the first valid data and the bit width of the padding data is equal to an integer multiple of the alignment bit width. In other words, the start bit of the second valid data in the first payload is also equal to an integer multiple of the alignment bit width. When the first payload is encapsulated and sent to the receiver-side die, the receiver-side die may quickly determine the first valid data and the at least a part of the second valid data from the first payload based on the alignment bit width, thereby reducing a processing delay of the receiver-side die and improving processing efficiency.

In a possible implementation of the first aspect, the alignment bit width is equal to 8 bits (bits), 16 bits, 32 bits, 64 bits, or 128 bits. In the foregoing possible implementation, the receiver-side die may quickly determine the first valid data and the at least a part of the second valid data from the first payload based on the alignment bit width, thereby reducing a processing delay of the receiver-side die and improving processing efficiency.

In a possible implementation of the first aspect, the first valid data includes a first channel identifier and the first data, and the second valid data includes a second channel identifier and the second data, where the first channel identifier indicates the first bus channel, and the second channel identifier indicates the second bus channel. In the foregoing possible implementation, sending priorities of the first data and the second data may be determined based on the first channel identifier and the second channel identifier, thereby improving data use efficiency. In addition, the bit width of the first data may be determined based on the first channel identifier, and the bit width of the second data may be determined based on the second channel identifier, so that when the first payload is determined based on the first valid data and the second valid data, the bit width of the padding data can be quickly determined, thereby improving a splicing speed.

In a possible implementation of the first aspect, the method further includes: determining sending priorities of the first valid data and the second valid data based on the first channel identifier and the second channel identifier. In the foregoing possible implementation, the first valid data and the second valid data are sent based on the sending priorities of the first valid data and the second valid data, thereby improving use efficiency of the valid data.

In a possible implementation of the first aspect, both a bit width of the first channel identifier and a bit width of the second channel identifier are 4 bits. In the foregoing possible implementation, the bit width of the first valid data and a bit width of the second valid data may be determined based on the bit width of the first channel identifier and the bit width of the second channel identifier, so that when the first payload is determined based on the first valid data and the second valid data, the bit width of the padding data can be quickly determined, thereby improving a splicing speed.

In a possible implementation of the first aspect, the determining a first payload based on the first valid data and the second valid data includes: if a bit width of the first payload is insufficient to carry the second valid data, filling only a part of the second valid data into the first payload. In the foregoing possible implementation, if the bit width of the first payload is insufficient to carry the second valid data, a part of the second valid data in the second valid data is filled into the first payload, so that the first payload does not have an idle bit width, that is, the first payload does not have an idle bit. When the first payload is encapsulated and sent to the receiver-side die, the first payload does not have an idle bit, thereby improving data transmission efficiency.

In a possible implementation of the first aspect, the method further includes: filling remaining data in the second valid data other than the part of the second valid data into a second payload, where the first payload is adjacent to the second payload. In the foregoing possible implementation, the remaining data in the second valid data other than the part of the second valid data is filled into the second payload that is adjacent to the first payload. When the second payload is encapsulated and sent to the receiver-side die, the receiver-side die may quickly determine the remaining data from the adjacent second payload, thereby improving a data determining speed.

In a possible implementation of the first aspect, the determining a first payload based on the first valid data and the second valid data includes: if a remaining bit width of the first payload other than bit widths occupied by the first valid data, the padding data, and the second valid data is less than or equal to a bit width of a channel identifier, writing the padding data into the remaining bit width. In the foregoing possible implementation, if the remaining bit width of the first payload other than the bit widths occupied by the first valid data, the padding data, and the second valid data is insufficient to carry a bit width of a channel identifier, the padding data is written into the remaining bit width, so that there is no idle bit in the first payload. When the first payload is encapsulated and sent to the receiver-side die, there is no idle bit in the first payload, thereby improving data transmission efficiency.

In a possible implementation of the first aspect, the method further includes: if the remaining bit width is greater than the bit width of the channel identifier, obtaining third valid data, where the third valid data includes third data from a third bus channel. The determining a first payload based on the first valid data and the second valid data includes: determining the first payload based on the first valid data, the second valid data, and the third valid data, where the first payload includes the first valid data, the padding data, the second valid data, the padding data, and at least a part of the third valid data that are spliced successively. In the foregoing possible implementation, there is no idle bit in the first payload. When the first payload is encapsulated and then sent to the receiver-side die, there is no idle bit in the first payload, thereby improving data transmission efficiency.

In a possible implementation of the first aspect, the encapsulated first payload includes a packet header and a packet tail. In the foregoing possible implementation, a type of a packet corresponding to the first payload and a related operation may be quickly determined based on the packet header and the packet tail, thereby improving processing efficiency of the first payload.

According to a second aspect, a data transmission method is provided for a transmitter-side die, where the method includes: obtaining first valid data, where the first valid data includes first data from a first bus channel; determining a first payload based on the first valid data and virtual data, where the first payload includes the first valid data, padding data, and the virtual data that are spliced successively, the virtual data includes a virtual identifier, and the virtual identifier indicates that the virtual data is invalid; and encapsulating and sending the first payload.

In the foregoing technical solution, if a priority of the first valid data is high and the first valid data cannot wait for other valid data for a long time, or the other valid data has been spliced at a current moment and no other valid data needs to be spliced, and a remaining bit width of the first payload other than a bit width occupied by the first valid data is greater than an alignment bit width, because a bit width of the padding data is less than the alignment bit width, the padding data cannot be completely written into the remaining bit width, and the first payload is determined based on the first valid data and the virtual data. The first payload includes the first valid data, the padding data, and the virtual data that are spliced successively, and the virtual data is invalid data. Therefore, there is no idle (remaining) bit width in the first payload, that is, there is no idle bit in the first payload. When the first payload is encapsulated into a first target packet, there is no idle bit in the packet, thereby improving data transmission efficiency.

According to a third aspect, a data transmission method is provided for a receiver-side die, where the method includes: receiving and parsing a first target packet to obtain a first payload; determining first valid data and at least a part of second valid data based on the first payload; and sending the first valid data to a first bus channel corresponding to the first valid data, and sending the at least a part of the second valid data to a second bus channel corresponding to the second valid data.

In the foregoing technical solution, the first target packet is parsed to obtain the first payload, and the first valid data and the at least a part of the second valid data are determined based on the first payload, thereby improving data receiving efficiency.

In a possible implementation of the third aspect, the determining first valid data and at least a part of second valid data based on the first payload includes: splitting the first payload based on an alignment bit width to obtain the first valid data, padding data, and the at least a part of the second valid data. In the foregoing possible implementation, the first payload may be directly split based on the alignment bit width, and each bit in the first payload does not need to be sequentially accessed, thereby reducing a data processing delay and further improving data processing efficiency.

In a possible implementation of the third aspect, a sum of a bit width of the first valid data and a bit width of the padding data is an integer multiple of the alignment bit width. In the foregoing possible implementation, a start bit of the first valid data in the first payload is 0 bits. The sum of the bit width of the first valid data and the bit width of the padding data is equal to an integer multiple of the alignment bit width, so that a start bit of the second valid data in the first payload is also equal to an integer multiple of the alignment bit width. The first valid data and the at least a part of the second valid data may be directly determined based on the alignment bit width, and each bit in the first payload does not need to be sequentially accessed, thereby reducing a data processing delay and further improving data processing efficiency.

In a possible implementation of the third aspect, a bit width of the padding data is less than the alignment bit width. In the foregoing possible implementation, the bit width of the padding data is less than the alignment bit width. The padding data is spliced after the first valid data, so that the sum of the bit width of the first valid data and the bit width of the padding data is equal to an integer multiple of the alignment bit width, and the start bit of the second valid data in the first payload is also equal to an integer multiple of the alignment bit width. The first valid data and the at least a part of the second valid data may be directly determined based on the alignment bit width, and each bit in the first payload does not need to be sequentially accessed, thereby reducing a data processing delay and further improving data processing efficiency.

In a possible implementation of the third aspect, the alignment bit width is equal to 8 bits (bits), 16 bits, 32 bits, 64 bits, or 128 bits. In the foregoing possible implementation, the first valid data and the at least a part of the second valid data may be quickly determined from the first target packet based on the alignment bit width, thereby reducing a data processing delay and improving data processing efficiency.

In a possible implementation of the third aspect, the first valid data includes a first channel identifier and first data, and the at least a part of the second valid data includes a second channel identifier and at least a part of second data, where the first channel identifier indicates the first bus channel, and the second channel identifier indicates the second bus channel. In the foregoing possible implementation, sending priorities of the first data and the second data may be determined based on the first channel identifier and the second channel identifier, thereby improving data use efficiency.

In a possible implementation of the third aspect, the method further includes: determining sending priorities of the first valid data and the at least a part of the second valid data based on the first channel identifier and the second channel identifier. In the foregoing possible implementation, the sending priorities of the data and the second data may be determined based on the first channel identifier and the second channel identifier, thereby improving data use efficiency.

In a possible implementation of the third aspect, before the sending the first valid data to a first bus channel corresponding to the first valid data, and sending the at least a part of the second valid data to a second bus channel corresponding to the second valid data, the method further includes: deleting the first channel identifier in the first valid data and the second channel identifier in the at least a part of the second valid data. In the foregoing possible implementation, accuracy of sent data is ensured.

In a possible implementation of the third aspect, the sending the at least a part of the second valid data to a second bus channel corresponding to the second valid data includes: if the at least a part of the second valid data is a part of the second valid data, receiving and parsing a second target packet to obtain a second payload; determining remaining data in the second valid data other than the part of the second valid data based on the second payload; and determining the second valid data based on the remaining data and the part of the second valid data, and sending the second valid data. In the foregoing possible implementation, after the second valid data is determined based on the part of the second valid data and the remaining data, the second valid data is sent, thereby ensuring accuracy of sent data.

In a possible implementation of the third aspect, the method further includes: determining the first valid data, the second valid data, and at least a part of third valid data based on the first payload; and sending the first valid data to the first bus channel corresponding to the first valid data, sending the second valid data to the second bus channel corresponding to the second valid data, and sending the at least a part of the third valid data to a third bus channel corresponding to the third valid data. In the foregoing possible implementation, different valid data is sent to a bus channel corresponding to the valid data, thereby ensuring accuracy of valid data in each bus channel.

In a possible implementation of the third aspect, a target packet includes a packet header and a packet tail. In the foregoing possible implementation, a type of a packet and a related operation may be quickly determined based on the packet header and the packet tail, thereby improving packet processing efficiency.

According to a fourth aspect, a data transmission method is provided, where the method includes: receiving and parsing a first target packet to obtain a first payload; determining first valid data based on the first payload; and sending the first valid data to a first bus channel corresponding to the first valid data.

In the foregoing technical solution, the first target packet is parsed to obtain the first payload, and the first valid data is determined based on the first payload, thereby improving data receiving efficiency.

According to a fifth aspect, a data transmission apparatus is provided, where the apparatus includes: an obtaining unit, configured to obtain first valid data and second valid data, where the first valid data includes first data from a first bus channel, and the second valid data includes second data from a second bus channel; a determining unit, configured to determine a first payload based on the first valid data and the second valid data, where the first payload includes the first valid data, padding data, and at least a part of the second valid data that are spliced successively; an encapsulation unit, configured to encapsulate the first payload; and a sending unit, configured to send the encapsulated first payload.

In a possible implementation of the fifth aspect, a sum of a bit width of the first valid data and a bit width of the padding data is equal to an integer multiple of an alignment bit width.

In a possible implementation of the fifth aspect, the bit width of the padding data is less than the alignment bit width.

In a possible implementation of the fifth aspect, the alignment bit width is equal to 8 bits (bits), 16 bits, 32 bits, 64 bits, or 128 bits.

In a possible implementation of the fifth aspect, the first valid data includes a first channel identifier and the first data, and the second valid data includes a second channel identifier and the second data, where the first channel identifier indicates the first bus channel, and the second channel identifier indicates the second bus channel.

In a possible implementation of the fifth aspect, the determining unit is further configured to determine sending priorities of the first valid data and the second valid data based on the first channel identifier and the second channel identifier.

In a possible implementation of the fifth aspect, both a bit width of the first channel identifier and a bit width of the second channel identifier are 4 bits.

In a possible implementation of the fifth aspect, the determining unit is further configured to: if a bit width of the first payload is insufficient to carry the second valid data, fill only a part of the second valid data into the first payload.

In a possible implementation of the fifth aspect, the determining unit is further configured to fill remaining data in the second valid data other than the part of the second valid data into a second payload, where the first payload is adjacent to the second payload.

In a possible implementation of the fifth aspect, the determining unit is further configured to: if a remaining bit width of the first payload other than bit widths occupied by the first valid data, the padding data, and the second valid data is less than or equal to a bit width of a channel identifier, write the padding data into the remaining bit width.

In a possible implementation of the fifth aspect, the obtaining unit is further configured to: if the remaining bit width is greater than or equal to the bit width of the channel identifier, obtain third valid data, where the third valid data includes third data from a third bus channel. The determining a first payload based on the first valid data and the second valid data includes: determining the first payload based on the first valid data, the second valid data, and the third valid data, where the first payload includes the first valid data, the padding data, the second valid data, the padding data, and at least a part of the third valid data that are spliced successively.

In a possible implementation of the fifth aspect, the encapsulated first payload includes a packet header and a packet tail.

According to a sixth aspect, a data transmission apparatus is provided, where the apparatus includes: an obtaining unit, configured to obtain first valid data, where the first valid data includes first data from a first bus channel; a determining unit, further configured to determine a first payload based on the first valid data and virtual data, where the first payload includes the first valid data, padding data, and the virtual data that are spliced successively, the virtual data includes a virtual identifier, and the virtual identifier indicates that the virtual data is invalid; an encapsulation unit, configured to encapsulate the first payload; and a sending unit, configured to send the encapsulated first payload.

According to a seventh aspect, a data transmission apparatus is provided, where the apparatus includes: a receiving unit, configured to receive a first target packet; a parsing unit, configured to parse the first target packet to obtain a first payload; a determining unit, configured to determine first valid data and at least a part of second valid data based on the first payload; and a sending unit, configured to: send the first valid data to a first bus channel corresponding to the first valid data, and send the at least a part of the second valid data to a second bus channel corresponding to the second valid data.

In a possible implementation of the seventh aspect, the determining unit is further configured to split the first payload based on an alignment bit width to obtain the first valid data, padding data, and the at least a part of the second valid data.

In a possible implementation of the seventh aspect, a sum of a bit width of the first valid data and a bit width of the padding data is an integer multiple of the alignment bit width.

In a possible implementation of the seventh aspect, the bit width of the padding data is less than the alignment bit width.

In a possible implementation of the seventh aspect, the alignment bit width is equal to 8 bits (bits), 16 bits, 32 bits, 64 bits, or 128 bits.

In a possible implementation of the seventh aspect, the first valid data includes a first channel identifier and first data, and the at least a part of the second valid data includes a second channel identifier and at least a part of second data, where the first channel identifier indicates the first bus channel, and the second channel identifier indicates the second bus channel.

In a possible implementation of the seventh aspect, the determining unit is further configured to determine sending priorities of the first valid data and the at least a part of the second valid data based on the first channel identifier and the second channel identifier.

In a possible implementation of the seventh aspect, both a bit width of the first channel identifier and a bit width of the second channel identifier are 4 bits.

In a possible implementation of the seventh aspect, the apparatus further includes a deletion unit, where the deletion unit is configured to delete the first channel identifier in the first valid data and the second channel identifier in the at least a part of the second valid data.

In a possible implementation of the seventh aspect, if the at least a part of the second valid data is a part of the second valid data, the receiving unit is further configured to: receive and parse a second target packet to obtain a second payload; the determining unit is further configured to determine remaining data in the second valid data other than the part of the second valid data based on the second payload; the determining unit is further configured to determine the second valid data based on the remaining data and the part of the second valid data; and the sending unit is further configured to send the second valid data.

In a possible implementation of the seventh aspect, the determining unit is further configured to determine the first valid data, the second valid data, and at least a part of third valid data based on the first payload; and the sending unit is further configured to: send the first valid data to the first bus channel corresponding to the first valid data, send the second valid data to the second bus channel corresponding to the second valid data, and send the at least a part of the third valid data to a third bus channel corresponding to the third valid data.

In a possible implementation of the seventh aspect, a target packet includes a packet header and a packet tail.

According to an eighth aspect, a data transmission apparatus is provided. The apparatus includes: a receiving unit, configured to: receive and parse a first target packet to obtain a first payload; a determining unit, configured to determine first valid data based on the first payload; and a sending unit, configured to send the first valid data to a first bus channel corresponding to the first valid data.

According to still another aspect of this application, a die is provided. The die includes a logical device, and the logical device is configured to perform the data transmission method provided in any one of the first aspect or the possible implementations of the first aspect.

According to still another aspect of this application, a die is provided. The die includes a logical device, and the logical device is configured to perform the data transmission method provided in the second aspect.

According to still another aspect of this application, a die is provided. The die includes a logical device, and the logical device is configured to perform the data transmission method provided in any one of the third aspect or the possible implementations of the third aspect.

According to still another aspect of this application, a die is provided. The die includes a logical device, and the logical device is configured to perform the data transmission method provided in the fourth aspect.

According to still another aspect of this application, a system on chip is provided. The system on chip includes a plurality of dies coupled to each other. The plurality of dies include a first die and a second die. The first die is configured to perform the data transmission method provided in any one of the first aspect or the possible implementations of the first aspect, or the data transmission method provided in the second aspect. The second die is configured to perform the data transmission method provided in any one of the third aspect or the possible implementations of the third aspect, or the data transmission method provided in the fourth aspect.

According to still another aspect of this application, a computer-readable storage medium is provided. The computer-readable storage medium includes computer instructions. When the computer instructions are run on a data transmission apparatus, related steps in the foregoing method embodiments are performed.

In still another aspect of this application, a computer program product including instructions is provided. When the computer program product runs on a device on a computer, a data transmission apparatus is enabled to perform related steps in the foregoing method embodiments.

It may be understood that the data transmission apparatus, the system on chip, the die, the computer-readable storage medium, and the computer program product provided above may be configured to perform the corresponding methods provided above. Therefore, for beneficial effects that can be achieved by the data transmission apparatus, the system on chip, the die, the computer-readable storage medium, and the computer program product, refer to the beneficial effects in the corresponding methods provided above. Details are not described herein again.

### BRIEF DESCRIPTION OF DRAWINGS

FIG. 1 is a diagram of a structure of an SoC;
FIG. 2 is a diagram of a structure of another SoC;
FIG. 3 is a diagram of a structure of a system on chip according to an embodiment of this application;
FIG. 4 is a diagram of a structure of a bus adapter according to an embodiment of this application;
FIG. 5 is a flowchart of a data transmission method according to an embodiment of this application;
FIG. 6 is a diagram of a structure of first valid data according to an embodiment of this application;
FIG. 7 is a diagram of a structure of a target packet according to an embodiment of this application;
FIG. 8 is a flowchart of another data transmission method according to an embodiment of this application;
FIG. 9 is a diagram of a structure of a target packet according to this application;
FIG. 10 is a diagram of a structure of another target packet according to an embodiment of this application;
FIG. 11 is a diagram of a structure of still another target packet according to an embodiment of this application;
FIG. 12 is a flowchart of still another data transmission method according to an embodiment of this application;
FIG. 13 is a flowchart of yet another data transmission method according to an embodiment of this application;
FIG. 14 is a diagram of a structure of a data transmission apparatus according to an embodiment of this application; and
FIG. 15 is a diagram of a structure of another data transmission apparatus according to an embodiment of this application.

### DESCRIPTION OF EMBODIMENTS

In this application, at least one means one or more, and a plurality of means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one (piece) of a, b, or c may indicate a, b, c, a and b, a and c, b and c, or a, b, and c, where a, b, and c may be singular or plural. In addition, in embodiments of this application, terms such as "first" and "second" are used for distinguishing between same objects or similar objects whose functions and purposes are basically the same. For example, a first threshold and a second threshold are merely used for distinguishing between different thresholds, and a sequence thereof is not limited. A person skilled in the art may understand that the terms such as "first" and "second" do not limit a quantity and an execution sequence.

It should be noted that, in this application, the term such as "example" or "for example" is used to give an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

Before embodiments of this application are described, related information of a system on chip (system on chip, SoC) is first described.

The system on chip (system on chip, SoC) implements interconnection between internal subsystems through an on-chip bus. For example, the on-chip bus may include an advanced extensible interface (advanced extensible interface, AXI) bus, an advanced extensible interface coherent extension (advanced extensible interface coherent extension, ACE) bus, or a coherence hub interface (coherent hub interface, CHI) bus. The SoC shown in FIG. 1 includes a media subsystem, a central processing unit (central processing unit, CPU) subsystem, and an artificial intelligence (artificial intelligence, AI) subsystem. When a plurality of subsystems in the SoC shown in FIG. 1 are all integrated on one die (Die), each module or processor in the media subsystem and the AI subsystem is interconnected to a first bus in the CPU subsystem through a first bus in the media subsystem and a first bus in the AI subsystem, to implement data transmission between the plurality of subsystems.

Because different on-chip buses (referred to as buses for short) have different protocols, a quantity of bus channels defined by the buses and a bit width of data transmitted in each bus channel are different. For example, the AXI bus may define five bus channels, each of the five bus channels may be used to transmit data, and data transmitted in the five bus channels has different bit widths. For example, the five bus channels include a write address channel and a write data bus channel, a bit width of the write address bus channel may be 101 bits (bits), and a bit width of the write data bus channel may be 152 bits. Optionally, not all the five bus channels need to transmit data at the same time. In other words, the five bus channels are not necessarily valid at the same time. The bus channel may also be referred to as a transmission channel, and the bit width of the data may be referred to as a length of the data.

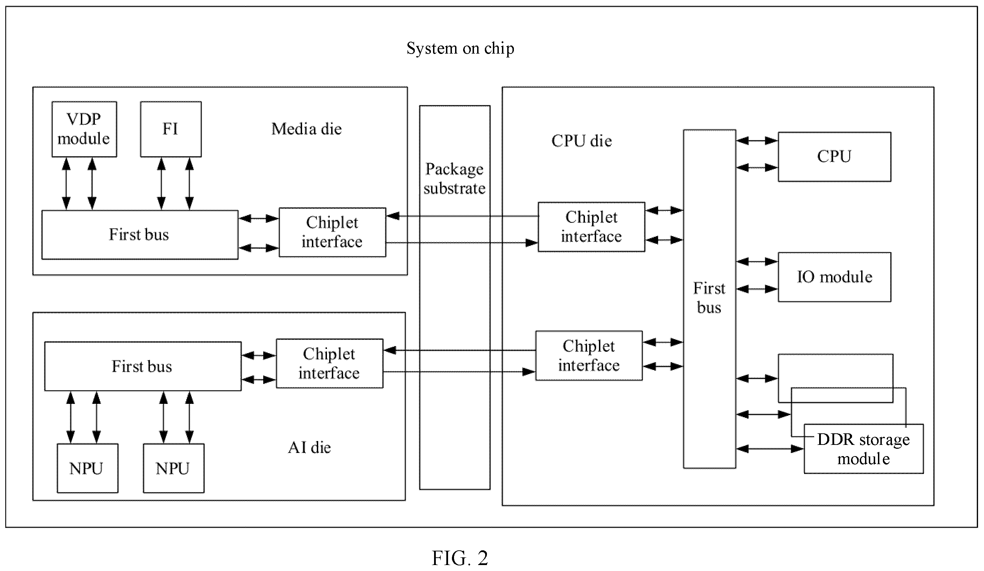

FIG. 2 is a diagram of a system on chip formed when the plurality of subsystems in the SoC shown in FIG. 1 are integrated on different dies respectively. FIG. 2 is a diagram of a structure of a system on chip. The system on chip includes a media die, an AI die, and a CPU die. The media die includes one chiplet (chiplet) interface, the AI die includes one chiplet interface, and the CPU die includes two chiplet interfaces. The media die and the AI die are respectively coupled to corresponding chiplet interfaces in the CPU die through respective chiplet interfaces, to implement interconnection between the plurality of dies. The system on chip shown in FIG. 2 further includes a package substrate, and the package substrate may be configured to package the plurality of dies.

Optionally, when the AI die and the media die transmit data to the corresponding chiplet interfaces in the CPU die through the respective chiplet interfaces, the AI die and the media die may be a transmitter side, and the CPU die is a receiver side. When the two chiplet interfaces in the CPU die transmit data to the chiplet interfaces in the AI die and the media die respectively, the CPU die may be a transmitter side, and the AI die and the media die may be a receiver side.

At present, how to implement data transmission between different dies through the chiplet interface becomes a problem that needs to be urgently resolved. Data can be transmitted between different dies in the following two manners:
Manner 1: A bus in a transmitter-side die transmits data to a chiplet interface through a plurality of bus channels, the chiplet interface collects data in each of the plurality of bus channels, to correspondingly obtain a plurality of pieces of data based on the plurality of bus channels, and the chiplet interface transmits the plurality of pieces of data to a corresponding chiplet interface in a receiver-side die. However, the plurality of pieces of data collected by the chiplet interface include valid data and invalid data, and transmission of the invalid data increases extra power consumption. In addition, when bandwidth of the plurality of pieces of data is small, bandwidth utilization of the chiplet interface is reduced, and transmission efficiency is further reduced.
Manner 2: A bus in a transmitter-side die transmits data to a chiplet interface through a plurality of bus channels, the chiplet interface collects and determines valid data in each of the plurality of bus channels, to correspondingly obtain a plurality of pieces of valid data based on the plurality of bus channels. For each of the plurality of pieces of valid data, the chiplet interface generates a packet of a fixed bit width based on the valid data, to correspondingly obtain a plurality of packets based on the plurality of pieces of valid data, and transmits the plurality of packets to a corresponding chiplet interface in a receiver-side die. However, because the bit widths of the packets are fixed, and bit widths of the plurality of pieces of valid data are different, there is an idle bit width in payloads of some of the plurality of packets when the packets with the fixed bit widths are generated based on the valid data. As a result, bandwidth utilization of the chiplet interface is reduced, and further transmission efficiency is reduced.

Based on this, embodiments of this application provide a data transmission method and apparatus, to improve data transmission efficiency. The method is applied to a system on chip. The method includes: obtaining first valid data and second valid data, where the first valid data includes first data from a first bus channel, and the second valid data includes second data from a second bus channel; determining a first payload based on the first valid data and the second valid data, where the first payload includes the first valid data, padding data, and at least a part of the second valid data that are spliced successively; and encapsulating and sending the first payload. In this process, the first payload includes the first valid data, the padding data, and the at least a part of the second valid data, so that there is no idle (remaining) bit width in the first payload. When the first payload is encapsulated and sent to a receiver-side die, data transmission efficiency is improved.

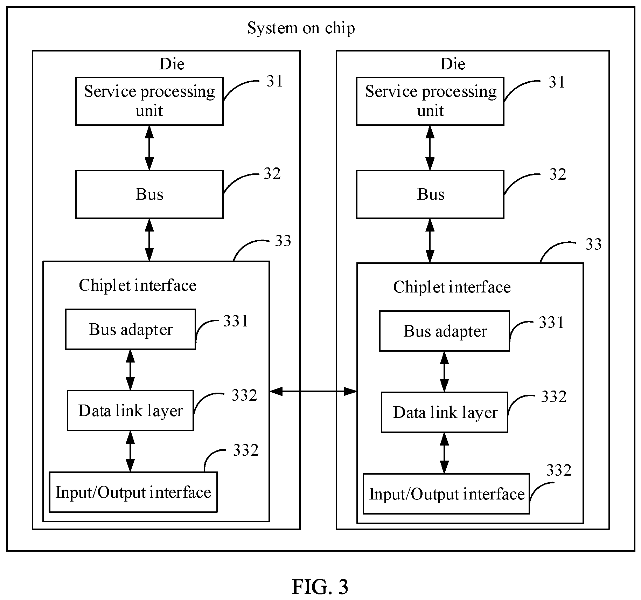

The following describes a structure of the system on chip. FIG. 3 is a diagram of a structure of a system on chip according to an embodiment of this application. The system on chip includes a plurality of dies coupled to each other. For any one of the plurality of dies, the die may be used as a receiver-side die, or may be used as a transmitter-side die. The die includes a service processing unit 31, a bus 32, and a chiplet interface 33. In FIG. 3, two dies are used as an example, and the two dies are coupled to each other through respective chiplet interfaces 33.

On the transmitter side, the service processing unit 31 may be configured to: generate, based on an access requirement, an access transaction that matches a type of the bus 32, and send the access transaction to the bus 32. On the receiver side, the service processing unit 31 is further configured to: receive the access transaction from the bus 32, and perform corresponding processing based on the access transaction.

On the transmitter side, the bus 32 may be configured to receive information. For example, the bus 32 may be configured to receive the access transaction from the service processing unit 31. The bus 32 is further configured to obtain a plurality of pieces of data based on the access transaction. For example, the bus 32 may perform related processing such as splitting and combination on the received access transaction to obtain the plurality of pieces of data. The bus 32 is further configured to send the plurality of pieces of data to the chiplet interface 33 through a plurality of bus channels. On the receiver side, the bus 32 may be configured to receive the plurality of pieces of data from the chiplet interface 33. The bus 32 is further configured to generate an access transaction based on the plurality of data and a bus protocol. The bus 32 is further configured to send the access transaction to the service processing unit 31.

The chiplet interface 33 may be configured to: receive data, process data, and send data. The chiplet interface 33 may include a bus adapter 331, a data link layer 332, and an input/output interface 333. The input/output interface 333 may include an input interface and an output interface. For example, on the transmitter side, the bus adapter 331 may be configured to: receive a plurality of pieces of data, and perform corresponding processing on the plurality of pieces of data to obtain a payload. The data link layer 332 may be configured to encapsulate the payload to obtain a packet. The output interface in the input/output interface 333 may send the packet. On the receiver side, the input interface in the input/output interface 333 may be configured to receive the packet. The data link layer 332 may be configured to parse the packet to obtain the payload. The bus adapter 331 may be configured to split the payload to obtain the plurality of pieces of data. For example, the bus adapter 331 may be configured to split the payload based on an alignment bit width, to obtain the plurality of pieces of data. The input/output interface 333 may also be referred to as a physical layer.

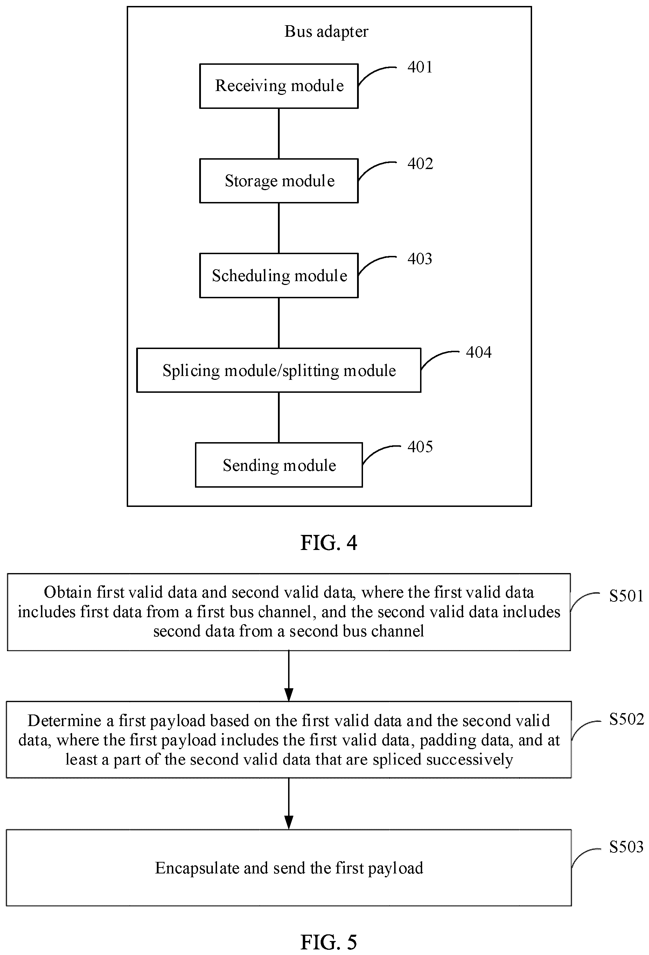

The following describes a structure of the bus adapter in FIG. 3 in detail with reference to FIG. 4.

FIG. 4 is a diagram of a structure of a bus adapter according to an embodiment of this application. The bus adapter includes a receiving module 401, a storage module 402, a scheduling module 403, a splicing module/splitting module 404, and a sending module 405.

On the transmitter side, the receiving module 401 may be configured to collect data in each of a plurality of bus channels, to correspondingly obtain a plurality of pieces of data. For each of the plurality of pieces of data, the receiving module 401 is further configured to collect channel information of a bus channel corresponding to the data from the bus channel, where the channel information indicates a bus channel type, to correspondingly obtain a plurality of pieces of channel information based on the plurality of pieces of data. On the receiver side, the receiving module 401 is further configured to receive a payload. For example, the receiving module 401 is further configured to receive the payload from the data link layer.

The storage module 402 may be configured to store the plurality of pieces of data and a plurality of channel identifiers.

The scheduling module 403 may be configured to determine sending priorities of the plurality of pieces of data. For example, the scheduling module 403 may be configured to determine a sending priority of data based on a channel identifier corresponding to each of the plurality of pieces of data, to determine the sending priorities of the plurality of pieces of data.

The splicing module/splitting module 404 may include a splicing module and a sending module. The splicing module may be configured to splice data, and the sending module splits the data. For example, on the transmitter side, for each new channel message in the plurality of pieces of channel information, the splicing module may be configured to generate a channel identifier corresponding to the channel information, to correspondingly obtain a plurality of channel identifiers; the splicing module may be configured to set a channel identifier corresponding to data in each of the plurality of pieces of data, to correspondingly obtain a plurality of valid data; and the splicing module is further configured to splice the plurality of valid data based on the sending priorities and the alignment bit width, to obtain a payload. On the receiver side, the splicing module/splitting module 404 is further configured to split the payload based on the alignment bit width to obtain the plurality of pieces of valid data. For each of the plurality of pieces of valid data, the splicing module/splitting module 404 is further configured to split the valid data to obtain corresponding data and a channel identifier.

The sending module 405 may be configured to send the payload. For example, on the transmitter side, the sending module 405 may be configured to send the payload to the data link layer. The sending module 405 is further configured to send the plurality of pieces of data. For example, on the receiver side, the sending module 405 is further configured to send the plurality of pieces of data to the bus.

The following describes in detail, based on the system on chip shown in FIG. 3, the data transmission method provided in this embodiment of this application. For a transmitter-side die in the plurality of dies, FIG. 5 is a flowchart of the data transmission method.

FIG. 5 is a flowchart of a data transmission method according to an embodiment of this application. The method includes the following steps.

S501: Obtain first valid data and second valid data, where the first valid data includes first data from a first bus channel, and the second valid data includes second data from a second bus channel.

The bus adapter may be configured to obtain the first valid data and the second valid data. Specifically, the bus adapter may be configured to obtain the first data and first channel information from the first bus channel, and obtain the second data and second channel information from the second bus channel, where the first channel information and the second channel information indicate types of the first bus channel and the second bus channel respectively. The bus adapter is further configured to: generate a first channel identifier based on the first channel information, and generate a second channel identifier based on the second channel information, where the first channel identifier indicates the first bus channel, and the second channel identifier indicates the second bus channel; and set the first channel identifier and the second channel identifier in the first data and the second data respectively, to correspondingly obtain the first valid data and the second valid data.

Optionally, the bus adapter may set the first channel identifier and the second channel identifier before a start bit location of the first data and a start bit location of the second data respectively, to obtain the first valid data and the second valid data. Alternatively, the first channel identifier and the second channel identifier may be set after an end bit location of the first data and an end bit location of the second data, to obtain the first valid data and the second valid data. This is not specifically limited in this application.

In addition, the first bus channel and the second bus channel may be a same bus channel or different bus channels from a same bus. For example, both the first bus channel and the second bus channel may be write address bus channels in an AXI bus, or the first bus channel and the second bus channel may be a write address bus channel and a write data bus channel in an AXI bus. The first bus channel and the second bus channel may also be different bus channels from different buses. For example, the first bus channel may be a bus channel in a first bus, the second bus channel may be a bus channel in a second bus, and the first bus and the second bus are different.

In addition, a bit width of the first valid data is equal to a sum of a bit width of the first channel identifier and a bit width of the first data, and a bit width of the second valid data is equal to a sum of a bit width of the second channel identifier and a bit width of the second data. In an actual application, the bit width of the first channel identifier may be equal to the bit width of the second channel identifier. For example, in a possible implementation, both the bit width of the first channel identifier and the bit width of the second channel identifier may be 4 bits (bits). In the following embodiments, an example in which the bit width of the channel identifier is 4 bits is used.

In addition, the bit width of the first data is related to the first bus channel, and the bit width of the second data is related to the second bus channel. In other words, bit widths of data in different bus channels are different. Either the first bus channel or the second bus channel may be a write address (write address) bus channel, a read address (read address) bus channel, a write data (write data) bus channel, a read data (read data) bus channel, or a write response (write response) bus channel. A bit width of data in the write address bus channel and the read address bus channel may be 101 bits, a bit width of data in the write data bus channel may be 152 bits, a bit width of data in the read data bus channel may be 138 bits, and a bit width of data in the write response bus channel may be 9 bits. The bit width of the data of the bus channel may be determined based on an actual requirement and experience of a related person skilled in the art. This is not specifically limited in this application.

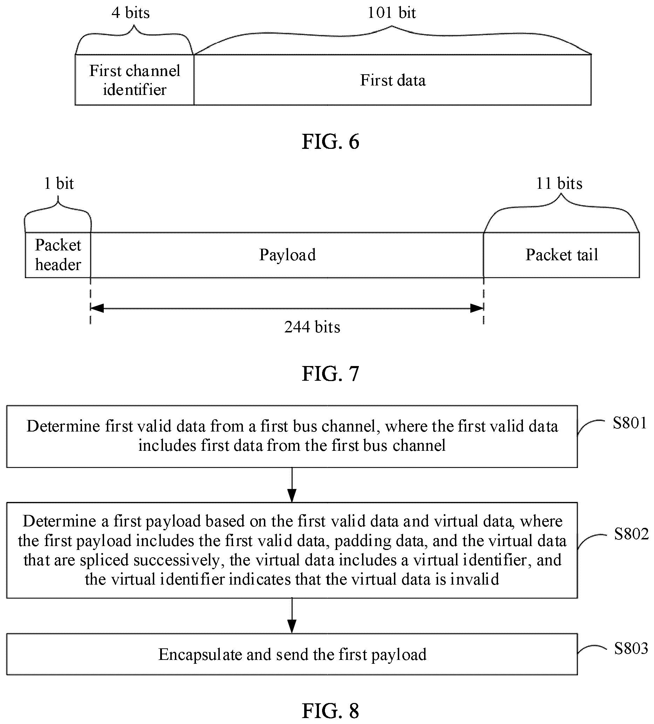

FIG. 6 is a diagram of a structure of first valid data according to an embodiment of this application. As shown in FIG. 6, the first valid data includes first data and a first channel identifier. In FIG. 6, an example in which a bit width of the first channel identifier is 4 bits and a bit width of the first data is 101 bits is used.

Further, the method further includes: The bus adapter may be configured to determine sending priorities of the first valid data and the second valid data based on the first channel identifier and the second channel identifier. The sending priorities may be used to determine a sending sequence of the valid data. In this embodiment of the present invention, the sending priorities may indicate a sending sequence of the first valid data and the second valid data.

S502: Determine a first payload based on the first valid data and the second valid data, where the first payload includes the first valid data, padding data, and at least a part of the second valid data that are spliced successively.

The bus adapter may be configured to determine the first payload based on the first valid data and the second valid data. Specifically, the bus adapter may be configured to sequentially splice the first valid data, the padding data, and the second valid data based on an alignment bit width, to obtain the first payload.

In addition, the alignment bit width may be a sliding window bit width, and a window size of the sliding window bit width may be fixed. For example, the alignment bit width may be a sliding window bit width when the first payload is split, and the sliding window bit width may also be referred to as a sliding window reading bit width. For example, when splitting the first payload, a receiver-side die performs sliding window reading on the first payload based on the alignment bit width (fixed bits) each time, to quickly determine the first valid data and the second valid data in the first payload. In comparison with a conventional case in which the receiver-side die performs sliding window reading on the first payload based on one bit each time, this improves efficiency of splitting the first payload by the receiver-side die.

In addition, the alignment bit width may be preset. For example, the alignment bit width may be preset by the transmitter-side die, and the transmitter-side die sends the preset alignment bit width to the receiver-side die; or the alignment bit width may be preset by the receiver-side die, and the receiver-side die sends the preset alignment bit width to the transmitter-side die; or the alignment bit width may be preset for the transmitter-side die and the receiver-side die. This is not specifically limited in this embodiment of this application. A size of the alignment bit width may be determined based on an actual requirement and experience of a related person skilled in the art. This is not specifically limited in this application. In an actual application, the alignment bit width may be usually equal to 8 bits (bits), 16 bits, 32 bits, 64 bits, or 128 bits. In the following embodiments, an example in which the alignment bit width is 32 bits is used.

In addition, whether there is padding data between the first valid data and the second valid data and a bit width of the padding data may be determined based on the alignment bit width. For example, the transmitter-side die may be configured to determine, based on the alignment bit width, whether there is padding data between the first valid data and the second valid data, and the bit width of the padding data, so that a sum of the bit width of the first valid data and the bit width of the padding data is equal to an integer multiple of the alignment bit width, that is, a start bit of the second valid data in the first payload is an integer multiple of the alignment bit width.

For example, when the alignment bit width is 32 bits, and the bit width of the first data is 104 bits, because 104 bits are not an integer multiple of 32 bits, to enable the start bit of the second valid data in the first payload to be an integer multiple of the alignment bit width, the padding data exists between the first valid data and the second valid data, and a bit width of the padding data is 24 bits. In this case, a sum of the bit width of the first valid data and the bit width of the padding data is 128 bits, which is four times the alignment bit width. Because a start bit in the first payload is 0 bits, the start bit of the second valid data in the first payload is 128 bits.

In a possible implementation, the bit width of the padding data is less than the alignment bit width. For example, when the alignment bit width is 32 bits, the bit width of the padding data is less than 32 bits. Specifically, the bus adapter may determine the bit width of the padding data based on the bit width of the first valid data and the alignment bit width. In this implementation, the bit width of the padding data is less than the alignment bit width, so that the sum of the bit width of the first valid data and the bit width of the padding data is equal to an integer multiple of the alignment bit width. In other words, when the start bit width of the second valid data in the first payload is equal to an integer multiple of the alignment bit width, an amount of valid data in the first payload is increased, and utilization of the first payload is improved.

Further, the bus adapter may be configured to determine, based on the bit width of the first payload, the bit width of the valid data (including the bit width of the first valid data and the bit width of the second valid data), the alignment bit width, and the bit width of the channel identifier, a type of the data included in the first payload. The following describes several cases of the type of the data included in the first payload.

In a first possible embodiment, if a remaining bit width of a bit width in the first payload other than bit widths occupied by the first valid data and the padding data (including the padding data spliced after the first valid data) can carry the second valid data (that is, the remaining bit width is greater than the bit width of the second valid data), and a remaining bit width of the first payload other than bit widths occupied by the first valid data, the padding data (including the padding data spliced after the first valid data and the padding data spliced after the second valid data), and the second valid data is greater than the bit width of the channel identifier, it indicates that the first payload can further carry more valid data. In this embodiment, third valid data may be obtained, where the third valid data includes third data from a third bus channel, and at least a part of the third valid data is written into the remaining bit width. In this case, the first payload includes the first valid data, the padding data, the second valid data, the padding data, and the at least a part of the third valid data that are spliced successively, and a sum of the bit width of the second valid data and the bit width of the padding data after the second valid data is an integer multiple of the alignment bit width.

In a possible implementation, if the bit width of the second valid data is equal to an integer multiple of the alignment bit width, and a remaining bit width of the first payload other than bit widths occupied by the first valid data, the padding data (including the padding data spliced after the first valid data), and the second valid data is greater than the bit width of the channel identifier, no padding data exists between the second valid data and the at least a part of the third valid data.

Optionally, the bit width of the first payload may be determined based on an actual requirement and experience of a related person skilled in the art. This is not specifically limited in this application. In an actual application, the bit width of the first payload may be 244 bits. In the following embodiments, an example in which the bit width of the first payload may be 244 bits is used.

In a second possible embodiment, if a remaining bit width of the first payload other than bit widths occupied by the first valid data and the padding data (including the padding data spliced after the first valid data) is greater than the bit width of the second valid data, and a remaining bit width of the first payload other than bit widths occupied by the first valid data, the padding data (including the padding data spliced after the first valid data and the padding data spliced after the second valid data), and the second valid data is less than or equal to the bit width of the channel identifier, it indicates that the remaining bit width is insufficient to carry more valid data. In this embodiment, padding data may be written into the remaining bit width. In this case, the first payload includes the first valid data, the padding data, the second valid data, and the padding data that are spliced successively.

In a third possible embodiment, if a remaining bit width of the first payload other than bit widths occupied by the first valid data and the padding data (including the padding data spliced after the first valid data) is greater than the bit width of the second valid data, and a remaining bit width of the first payload other than bit widths occupied by the first valid data, the padding data (including the padding data spliced after the first valid data), and the second valid data is less than or equal to the bit width of the channel identifier, padding data is written into the remaining bit width. In this case, the first payload includes the first valid data, the padding data, the second valid data, and the padding data that are spliced successively.

In a fourth possible embodiment, if a remaining bit width of the first payload other than bit widths occupied by the first valid data and the padding data (including the padding data spliced after the first valid data) is insufficient to carry the second valid data, that is, the remaining bit width of the first payload other than the bit widths occupied by the first valid data and the padding data (including the padding data spliced after the first valid data) is less than the bit width of the second valid data, only a part of the second valid data is filled into the first payload. In this case, the first payload includes the first valid data, the padding data, and the part of the second valid data that are spliced successively.

Further, the method further includes: The bus adapter fills remaining data in the second valid data other than the part of the second valid data into a second payload, where the first payload is adjacent to the second payload; and the data link layer encapsulates the second payload to obtain a second target packet.

In the foregoing possible embodiment, if the bit width of the first valid data is equal to an integer multiple of the alignment bit width, there is no padding data between the first valid data and the second valid data. In this case, the bit width of the padding data between the first valid data and the second valid data is zero.

It can be learned from the foregoing embodiments that the amount of the valid data spliced in the first payload is related to the bit width of the valid data, the bit width of the first payload, and the alignment bit width.

S503: Encapsulate and send the first payload.

The data link layer encapsulates the first payload to obtain the first target packet. The first target packet includes a packet header (header), the first payload (payload), and a packet tail (tail). Specifically, the data link layer generates the packet header and the packet tail that correspond to the first payload, and obtains the first target packet based on the packet header, the first payload, and the packet tail. The input/output interface sends the first target packet to the input/output interface in the receiver-side die.

In addition, the bit width of the first target packet is equal to a sum of a bit width of the packet header, the bit width of the first payload, and a bit width of the packet tail. For example, in an actual application, the bit width of the first target packet may be 256 bits, where the bit width of the packet header may be 1 bit, and the bit width of the packet tail may be 11 bits. In the following embodiment, the bit width of the first target packet may be 256 bits, where the bit width of the packet header may be 1 bit, the bit width of the packet tail may be 11 bits, and the bit width of the payload is 244 bits.

FIG. 7 is a diagram of a structure of a target packet according to an embodiment of this application. The target packet includes a packet header, a payload, and a packet tail. In FIG. 7, an example in which a bit width of the packet header is 1 bit, a bit width of the payload is 244 bits, and a bit width of the packet tail is 11 bits is used.

In a possible implementation, if a priority of first valid data is high and the first valid data cannot wait for other valid data for a long time, or the other valid data has been spliced at a current moment and no other valid data needs to be spliced, and a remaining bit width of a first payload other than a bit width occupied by the first valid data is greater than an alignment bit width, because a bit width of padding data is less than the alignment bit width, the padding data cannot be completely written into the remaining bit width, and virtual data needs to be written into a part of the remaining bit width.

FIG. 8 is a flowchart of another data transmission method according to an embodiment of this application. The method includes the following steps.

S801: Determine first valid data from a first bus channel, where the first valid data includes first data from the first bus channel.

S802: Determine a first payload based on the first valid data and virtual data, where the first payload includes the first valid data, padding data, and the virtual data that are spliced successively, the virtual data includes a virtual identifier, and the virtual identifier indicates that the virtual data is invalid.

The virtual identifier may indicate that the virtual data is invalid data, and a bit width of the virtual identifier may be equal to a bit width of the channel identifier. In an actual application, the virtual identifier may be "CN:0", and the virtual data may also be referred to as invalid data. The virtual data may be represented as VP.

S803: Encapsulate and send the first payload.

A data link layer encapsulates the first payload to obtain a first target packet. The first target packet includes a packet header, the first payload, and a packet tail.

In a possible embodiment, if a remaining bit width of the first payload other than a bit width occupied by the first valid data is less than or equal to the bit width of the channel identifier, the padding data is written into the remaining bit width, where the first payload includes the first valid data and the padding data that are spliced successively.

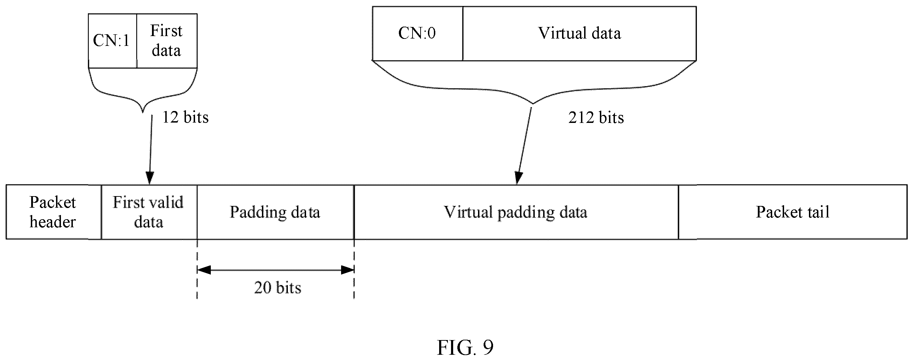

FIG. 9 is a diagram of a structure of a target packet according to this application. The target packet includes a packet header, a payload, and a packet tail, and the payload includes first valid data, padding data, and virtual data that are spliced successively. The first valid data includes a first channel identifier "CN:1" and first data, and the virtual data includes a virtual identifier "CN:0" and virtual data. In FIG. 9, an example in which a bit width of the first valid data is 12 bits, a bit width of the padding data is 20 bits, and a bit width of the virtual data is 212 bits is used.

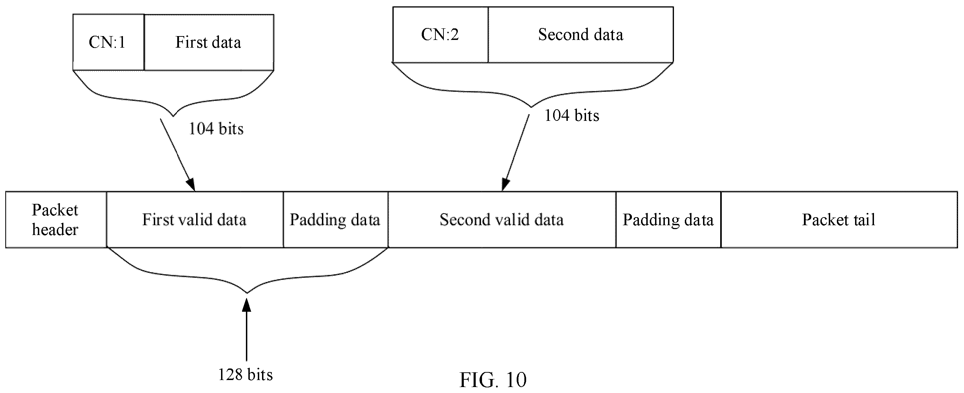

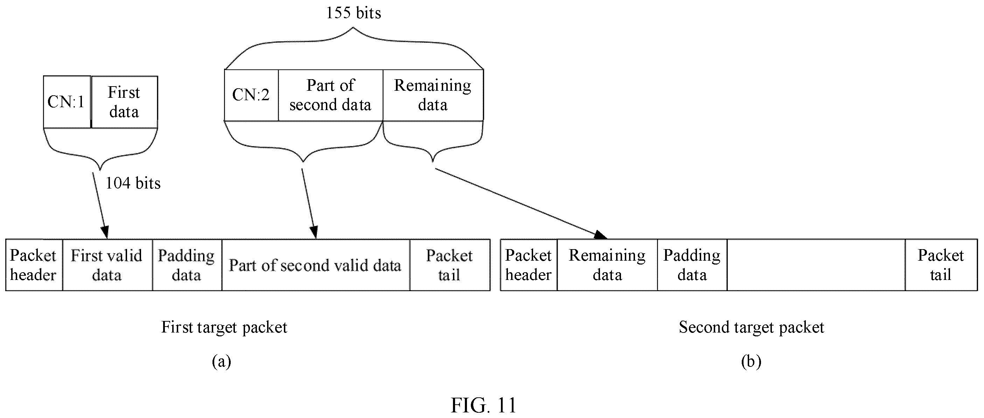

For ease of understanding, the following describes a data transmission method provided in this application with reference to FIG. 10 and FIG. 11.

FIG. 10 is a diagram of a structure of another target packet according to an embodiment of this application. The target packet includes a packet header, a payload, and a packet tail, and the payload includes first valid data, padding data, second valid data, and padding data that are spliced successively. The first valid data includes a first channel identifier and first data, and the second valid data includes a second channel identifier and second data. In FIG. 10, an example in which the first channel identifier is "CN:1", the second channel identifier is "CN:2", both a bit width of the first valid data and a bit width of the second valid data are 104 bits, and a sum of the bit width of the first valid data and a bit width of the padding data is 128 bits is used.

FIG. 11 is a diagram of a structure of still another target packet according to an embodiment of this application. (a) in FIG. 11 is a diagram of a structure of a first target packet, and (b) in FIG. 11 is a diagram of a structure of a second target packet adjacent to the first target packet. It can be learned from (a) in FIG. 11 that the first target packet includes a packet header, a first payload, and a packet tail, where the first payload includes first valid data, padding data, and a part of second valid data that are spliced successively. The first valid data includes an identifier of a first channel identifier and first data, and the part of the second valid data includes a second channel identifier and a part of second data. It can be learned from (b) in FIG. 11 that the second target packet includes a packet header, a second payload, and a packet tail, where the second payload includes remaining data, padding data, and third valid data that are in the second valid data other than the part of the second valid data and that are spliced successively. In FIG. 11, an example in which the first channel identifier is "CN:1", the second channel identifier is "CN:2", a bit width of the first valid data is 104 bits, and a bit width of the second valid data is 155 bits is used. FIG. 10 does not show the third valid data.

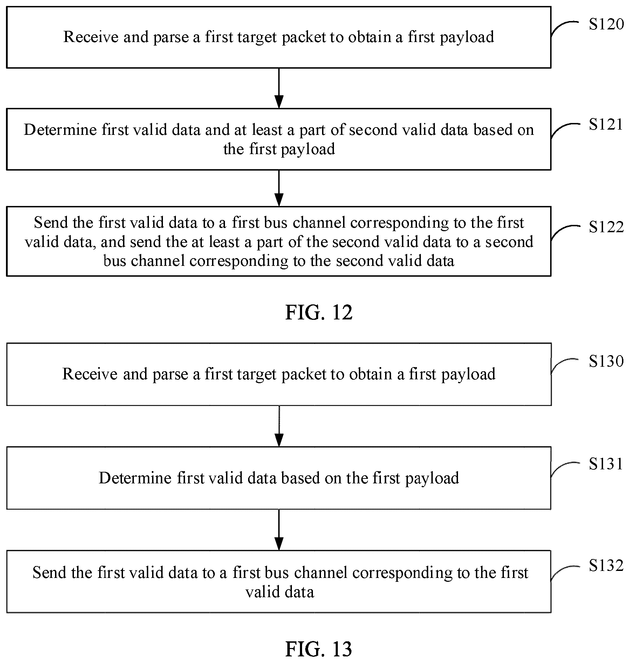

The following describes in detail, based on the system on chip shown in FIG. 3, another data transmission method provided in this embodiment of this application. For a receiver-side die in the plurality of dies, FIG. 12 is a flowchart of the data transmission method.

FIG. 12 is a flowchart of another data transmission method according to an embodiment of this application. The method includes the following steps.

S120: Receive and parse a first target packet to obtain a first payload.

The input/output interface receives the first target packet from the input/output interface of the transmitter-side die, and the data link layer parses the first target packet to obtain the first payload.

S121: Determine first valid data and at least a part of second valid data based on the first payload.

The bus adapter determines the first valid data and the at least a part of the second valid data based on the first payload. Specifically, the bus adapter splits the first payload based on an alignment bit width to obtain the first valid data, padding data, and the at least a part of the second valid data.

In addition, the alignment bit width may be a sliding window bit width, and a window size of the sliding window bit width may be fixed. For example, the bus adapter performs sliding window reading on the first payload each time based on the alignment bit width (fixed bits), to obtain the first valid data, the padding data, and the at least a part of the second valid data. The sliding window bit width may also be referred to as a sliding window reading bit width. In comparison with a conventional case in which the bus adapter performs sliding window reading on the first payload based on one bit each time, this improves efficiency of splitting the first payload by the receiver-side die, and further improves efficiency of processing a packet by the receiver-side die.

In addition, the alignment bit width may be preset. For example, the alignment bit width may be preset by the transmitter-side die, and the transmitter-side die sends the preset alignment bit width to the receiver-side die; or the alignment bit width may be preset by the receiver-side die, and the receiver-side die sends the preset alignment bit width to the transmitter-side die; or the alignment bit width may be preset for the transmitter-side die and the receiver-side die. This is not specifically limited in this embodiment of this application. A size of the alignment bit width may be determined based on an actual requirement and experience of a related person skilled in the art. This is not specifically limited in this application. In an actual application, the alignment bit width may be usually equal to 8 bits (bits), 16 bits, 32 bits, 64 bits, or 128 bits. In the following embodiments, an example in which the alignment bit width is 32 bits is used.

The first valid data includes a first channel identifier and first data, and the at least a part of the second valid data includes a second channel identifier and at least a part of second data, where the first channel identifier indicates the first bus channel, and the second channel identifier indicates the second bus channel.

S122: Send the first valid data to a first bus channel corresponding to the first valid data, and send the at least a part of the second valid data to a second bus channel corresponding to the second valid data.

Further, before step S122, the method includes: The bus adapter determines sending priorities of the first valid data and the at least a part of the second valid data based on the first channel identifier and the second channel identifier.

Specifically, the first valid data and the at least a part of the second valid data are sent based on the sending priorities of the first valid data and the at least a part of the second valid data.

In a possible embodiment, if the at least a part of the second valid data is a part of the second valid data, a second target packet adjacent to the first target packet is received and parsed to obtain a second payload; remaining data in the second valid data other than the part of the second valid data is determined based on the second payload; and the second valid data is determined based on the remaining data and the part of the second valid data, and the second valid data is sent.

Further, before step S122, the method includes: deleting the first channel identifier in the first valid data and the second channel identifier in the at least a part of the second valid data.

In a possible embodiment, the method further includes: determining the first valid data, the second valid data, and at least a part of third valid data based on the first payload; and sending the first valid data to the first bus channel corresponding to the first valid data, sending the second valid data to the second bus channel corresponding to the second valid data, and sending the at least a part of the third valid data to a third bus channel corresponding to the third valid data.

FIG. 13 is a flowchart of yet another data transmission method according to an embodiment of this application. The method includes the following steps.

S130: Receive and parse a first target packet to obtain a first payload.

S131: Determine first valid data based on the first payload.

S132: Send the first valid data to a first bus channel corresponding to the first valid data.

An embodiment of this application provides a data transmission method. The method includes: determining first valid data from a first bus channel, and determining second valid data from a second bus channel; determining a first payload based on the first valid data and the second valid data, where the first payload includes the first valid data, padding data, and at least a part of the second valid data that are spliced successively, and a sum of a bit width of the first valid data and a bit width of the padding data is an integer multiple of an alignment bit width; and encapsulating the first payload into a first target packet, and sending the first target packet. In this process, the first payload includes the first valid data, the padding data, and the at least a part of the second valid data, so that there is no idle (remaining) bit width in the first payload. When the first payload is encapsulated into the first target packet and sent to a receiver-side die, data transmission efficiency is improved. In addition, after receiving the first target packet, the receiver-side die may quickly obtain the first valid data and the at least a part of the second valid data based on the alignment bit width, thereby reducing a processing delay of the receiver-side die and improving processing efficiency.

It can be understood that, to implement the foregoing functions, the data transmission apparatus includes a corresponding hardware structure and/or software module for performing the functions. A person skilled in the art should easily be aware that, in combination with steps of the data transmission method in the examples described in embodiments in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the data transmission apparatus may be divided into function modules based on the foregoing method examples. For example, function modules may be obtained through division based on corresponding functions, or at least two functions may be integrated into one processing module. The integrated module may be implemented in a form of hardware, or may be implemented in a form of a software function module. It should be noted that, in embodiments of this application, module division is an example, and is merely a logical function division. In actual implementation, another division manner may be used.

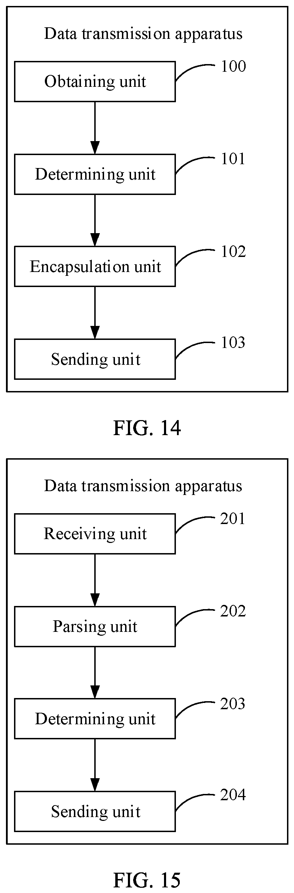

When each function module is obtained through division based on each corresponding function, FIG. 14 is a possible diagram of a structure of a data transmission apparatus in the foregoing embodiment. The data transmission apparatus includes an obtaining unit 100, a determining unit 101, an encapsulation unit 102, and a sending unit 103. The obtaining unit 100 is configured to support the data transmission apparatus in performing S501 in the foregoing method embodiment. The determining unit 101 is configured to support the data transmission apparatus in performing S502 in the foregoing method embodiment. The encapsulation unit 102 and the sending unit 103 are configured to support the data transmission apparatus in performing S503 in the foregoing method embodiment.

In hardware implementation, the obtaining unit 100 may be the receiving module 401 shown in FIG. 4, the determining unit 101 may be the splicing module/splitting module 404 shown in FIG. 4, the encapsulation unit 102 may be the data link layer 332 shown in FIG. 3, and the sending unit 103 may be the input/output interface 333 shown in FIG. 3.

FIG. 15 is a possible diagram of a structure of a data transmission apparatus in the foregoing embodiments. The data transmission apparatus includes a receiving unit 201, a parsing unit 202, a determining unit 203, and a sending unit 204. The receiving unit 201 and the parsing unit 202 are configured to support the data transmission apparatus in performing S120 in the foregoing method embodiment. The determining unit 203 is configured to support the data transmission apparatus in performing S121 in the foregoing method embodiment. The sending unit 204 is configured to support the data transmission apparatus in performing S122 in the foregoing method embodiment.

In hardware implementation, the receiving unit 201 may be the receiving module 401 shown in FIG. 4, the parsing unit 202 and the determining unit 203 may be the splicing module/splitting module 404 shown in FIG. 4, and the sending unit 204 may be the input/output interface 333 shown in FIG. 3.

It should be noted that all related content of the steps in the foregoing method embodiments may be cited in function description of corresponding function modules. Details are not described herein again. The apparatus provided in this embodiment of this application is configured to perform a corresponding function in the foregoing embodiment, and therefore can achieve same effect as the foregoing method.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

In addition, function units in embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for enabling an apparatus to perform all or some of the steps of the methods described in embodiments of this application. The foregoing storage medium includes any medium that can store program code, such as a USB flash drive, a removable hard disk, a ROM, a RAM, a magnetic disk, or an optical disc.

Another aspect of this application provides a die, where the die includes a logic device, and the logic device is configured to perform one or more steps in S501 to S503 in the foregoing method embodiment.

Another aspect of this application provides a die, where the die includes a logic device, and the logic device is configured to perform one or more steps in S801 to S803 in the foregoing method embodiment.

Another aspect of this application provides a die, where the die includes a logic device, and the logic device is configured to perform one or more steps in S120 to S122 in the foregoing method embodiment.

Another aspect of this application provides a die, where the die includes a logic device, and the logic device is configured to perform one or more steps in S130 to S132 in the foregoing method embodiment.

Another aspect of this application provides a system on chip. The system on chip includes a plurality of dies that are coupled to each other. The plurality of dies include a first die and a second die. The first die is configured to perform one or more steps in S501 to S503 in the foregoing method embodiment, or the first die is configured to perform one or more steps in S801 to S803 in the foregoing method embodiment. The second die is configured to perform one or more steps in S120 to S122 in the foregoing method embodiment; or the second die is configured to perform one or more steps in S130 to S132 in the foregoing method embodiment.

According to still another aspect of this application, a computer-readable storage medium is provided. The computer-readable storage medium includes computer instructions. When the computer instructions are run on a data transmission apparatus, related steps in the foregoing method embodiments are performed.

According to still another aspect of this application, a computer program product including instructions is provided. When the computer program product runs on a device on a computer, a data transmission apparatus is enabled to perform related steps in the foregoing method embodiment.

In conclusion, the foregoing descriptions are merely specific embodiments of this application, but are not intended to limit the protection scope of this application. Any variation or replacement within the technical scope disclosed in this application shall fall within the protection scope of this application. Therefore, the protection scope of this application shall be subject to the protection scope of the claims.

The bit width of the target packet mentioned in S503 and FIG. 7 may be 256 bits. Herein, it does not indicate that the bit width of the target packet is a fixed value of 256 bits. In an actual product, bit widths of the packet header, the payload, and the packet tail in the target packet in FIG. 7 may have a plurality of length modes. For example, the bit width of the payload may be selected from a plurality of preset bit width values. Correspondingly, the bit width of the packet header is not limited to 1 bit in FIG. 7, so that the packet header may carry more indication bits, for example, an indication bit used to indicate a bit width mode of the payload. If there are four bit width modes for the bit width of the payload, only two indication bits in the packet header are enough to indicate a bit width length of the payload in the target packet. Specifically, a bit width of the payload in a first bit width mode may be X bits, and an indication bit may be "00", to represent that the bit width of the payload in the current target packet uses the first bit width mode, that is, X bits. Similarly, a bit width of the payload in a second bit width mode may be Y bits, and a corresponding indication bit may be "01". X and Y are integers and X is usually not equal to Y. The rule applies. An indication bit "10" indicates that the payload uses a third bit width mode, and an indication bit "11" indicates that the payload uses a fourth bit width mode.

In addition to the bit width of the target packet, bit widths of a plurality of information bits mentioned above may also be set to other values. For example, a bit width of a channel identifier may also be 5 bits; a bit width of data in the write address bus channel and the read address bus channel may be 107 bits; a bit width of data in the write data bus channel may be 157 bits; a bit width of data in the read data bus channel may be 143 bits; and a bit width of data in the write response bus channel may be 14 bits.

## Claims

1. A data transmission method, wherein the method comprises:
obtaining first valid data and second valid data, wherein the first valid data comprises first data from a first bus channel, and the second valid data comprises second data from a second bus channel;
determining a first payload based on the first valid data and the second valid data, wherein the first payload comprises the first valid data, padding data, and at least a part of the second valid data that are spliced successively; and
encapsulating and sending the first payload.

2. The method according to claim 1, wherein a sum of a bit width of the first valid data and a bit width of the padding data is equal to an integer multiple of an alignment bit width.

3. The method according to claim 2, wherein the bit width of the padding data is less than the alignment bit width.

4. The method according to claim 2 or 3, wherein the alignment bit width is equal to 8 bits (bits), 16 bits, 32 bits, 64 bits, or 128 bits.

5. The method according to any one of claims 1 to 4, wherein the first valid data comprises a first channel identifier and the first data, and the second valid data comprises a second channel identifier and the second data, wherein the first channel identifier indicates the first bus channel, and the second channel identifier indicates the second bus channel.

6. The method according to claim 5, wherein the method further comprises:
determining sending priorities of the first valid data and the second valid data based on the first channel identifier and the second channel identifier.

7. The method according to claim 5 or 6, wherein both a bit width of the first channel identifier and a bit width of the second channel identifier are 4 bits.

8. The method according to any one of claims 1 to 7, wherein the determining a first payload based on the first valid data and the second valid data comprises:
if a bit width of the first payload is insufficient to carry the second valid data, filling only a part of the second valid data into the first payload.

9. The method according to claim 8, wherein the method further comprises:
filling remaining data in the second valid data other than the part of the second valid data into a second payload; and
encapsulating and sending the second payload.

10. The method according to any one of claims 5 to 9, wherein the determining a first payload based on the first valid data and the second valid data comprises:
if a remaining bit width of the first payload other than bit widths occupied by the first valid data, the padding data, and the second valid data is less than or equal to a bit width of a channel identifier, writing the padding data into the remaining bit width.

11. The method according to claim 10, wherein the method further comprises:
if the remaining bit width is greater than the bit width of the channel identifier, obtaining third valid data, wherein the third valid data comprises third data from a third bus channel; and
the determining a first payload based on the first valid data and the second valid data comprises: determining the first payload based on the first valid data, the second valid data, and the third valid data, wherein the first payload comprises the first valid data, the padding data, the second valid data, the padding data, and at least a part of the third valid data that are spliced successively.

12. The method according to any one of claims 1 to 11, wherein the encapsulating and sending the first payload comprises:
encapsulating the first payload to obtain a first target packet, wherein the first target packet comprises a packet header and a packet tail; and
sending the first target packet.

13. The method according to claim 12, wherein the packet header comprises an indication bit that indicates a bit width mode of the first payload, and the first payload has different bit width lengths in different bit width modes.

14. The method according to claim 5 or 6, wherein a bit width of the first channel identifier and a bit width of the second channel identifier are 5 bits.

15. A data transmission method, wherein the method comprises:
obtaining first valid data, wherein the first valid data comprises first data from a first bus channel;
determining a first payload based on the first valid data and virtual data, wherein the first payload comprises the first valid data, padding data, and the virtual data that are spliced successively, the virtual data comprises a virtual identifier, and the virtual identifier indicates that the virtual data is invalid; and
encapsulating and sending the first payload.

16. A data transmission method, wherein the method comprises:
receiving and parsing a first target packet to obtain a first payload;
determining first valid data and at least a part of second valid data based on the first payload; and
sending the first valid data to a first bus channel corresponding to the first valid data, and sending the at least a part of the second valid data to a second bus channel corresponding to the second valid data.

17. The method according to claim 16, wherein the determining first valid data and at least a part of second valid data based on the first payload comprises:
splitting the first payload based on an alignment bit width to obtain the first valid data, padding data, and the at least a part of the second valid data.

18. The method according to claim 17, wherein a sum of a bit width of the first valid data and a bit width of the padding data is equal to an integer multiple of the alignment bit width.

19. The method according to claim 15 or 16, wherein a bit width of the padding data is less than the alignment bit width.

20. The method according to any one of claims 17 to 19, wherein the alignment bit width is equal to 8 bits (bits), 16 bits, 32 bits, 64 bits, or 128 bits.

21. The method according to any one of claims 16 to 20, wherein the first valid data comprises a first channel identifier and first data, and the at least a part of the second valid data comprises a second channel identifier and at least a part of second data, wherein the first channel identifier indicates the first bus channel, and the second channel identifier indicates the second bus channel.

22. The method according to claim 21, wherein the method further comprises:
determining sending priorities of the first valid data and the at least a part of the second valid data based on the first channel identifier and the second channel identifier.

23. The method according to claim 21 or 22, wherein both a bit width of the first channel identifier and a bit width of the second channel identifier are 4 bits.

24. The method according to any one of claims 21 to 23, wherein before the sending the first valid data to a first bus channel corresponding to the first valid data, and sending the at least a part of the second valid data to a second bus channel corresponding to the second valid data, the method further comprises:
deleting the first channel identifier in the first valid data and the second channel identifier in the at least a part of the second valid data.

25. The method according to any one of claims 16 to 24, wherein the sending the at least a part of the second valid data to a second bus channel corresponding to the second valid data comprises:
if the at least a part of the second valid data is a part of the second valid data, receiving and parsing a second target packet to obtain a second payload;
determining remaining data in the second valid data other than the part of the second valid data based on the second payload; and
determining the second valid data based on the remaining data and the part of the second valid data, and sending the second valid data.

26. The method according to any one of claims 16 to 25, wherein the determining first valid data and at least a part of second valid data based on the first payload comprises:
determining the first valid data, the second valid data, and at least a part of third valid data based on the first payload; and
sending the first valid data to the first bus channel corresponding to the first valid data, sending the second valid data to the second bus channel corresponding to the second valid data, and sending the at least a part of the third valid data to a third bus channel corresponding to the third valid data.

27. The method according to any one of claims 16 to 26, wherein the target packet comprises a packet header and a packet tail.

28. The method according to claim 27, wherein the method further comprises:
obtaining an indication bit from the packet header, wherein the indication bit indicates a bit width mode of the first payload, and the first payload has different bit width lengths in different bit width modes.

29. The method according to claim 21 or 22, wherein a bit width of the first channel identifier and a bit width of the second channel identifier are 5 bits.

30. A data transmission method, wherein the method comprises:
receiving and parsing a first target packet to obtain a first payload;
determining first valid data based on the first payload, wherein the first payload comprises the first valid data, padding data, and virtual data, the virtual data comprises a virtual identifier, and the virtual identifier indicates that the virtual data is invalid; and
sending the first valid data to a first bus channel corresponding to the first valid data.

31. A data transmission apparatus, wherein the apparatus comprises:
an obtaining unit, configured to obtain first valid data and second valid data, wherein the first valid data comprises first data from a first bus channel, and the second valid data comprises second data from a second bus channel;
a determining unit, configured to determine a first payload based on the first valid data and the second valid data, wherein the first payload comprises the first valid data, padding data, and at least a part of the second valid data that are spliced successively;
an encapsulation unit, configured to encapsulate the first payload; and
a sending unit, configured to send the encapsulated first payload.

32. The apparatus according to claim 31, wherein a sum of a bit width of the first valid data and a bit width of the padding data is equal to an integer multiple of an alignment bit width.

33. The apparatus according to claim 32, wherein the bit width of the padding data is less than the alignment bit width.

34. The apparatus according to claim 31 or 32, wherein the alignment bit width is equal to 8 bits (bits), 16 bits, 32 bits, 64 bits, or 128 bits.

35. The apparatus according to any one of claims 31 to 34, wherein the first valid data comprises a first channel identifier and the first data, and the second valid data comprises a second channel identifier and the second data, wherein the first channel identifier indicates the first bus channel, and the second channel identifier indicates the second bus channel.

36. The apparatus according to claim 35, wherein the determining unit is further configured to:
determine sending priorities of the first valid data and the second valid data based on the first channel identifier and the second channel identifier.

37. The apparatus according to claim 35 or 36, wherein both a bit width of the first channel identifier and a bit width of the second channel identifier are 4 bits.

38. The apparatus according to any one of claims 31 to 37, wherein the determining unit is further configured to:
if a bit width of the first payload is insufficient to carry the second valid data, fill only a part of the second valid data into the first payload.

39. The apparatus according to claim 38, wherein
the determining unit is further configured to fill remaining data in the second valid data other than the part of the second valid data into a second payload;
the encapsulation unit is further configured to encapsulate the second payload; and
the sending unit is further configured to send the encapsulated second payload.

40. The apparatus according to any one of claims 35 to 39, wherein the determining unit is further configured to:
if a remaining bit width of the first payload other than bit widths occupied by the first valid data, the padding data, and the second valid data is less than or equal to a bit width of the channel identifier, write the padding data into the remaining bit width.

41. The apparatus according to claim 40, wherein
the obtaining unit is further configured to: if the remaining bit width is greater than or equal to the bit width of the channel identifier, obtain third valid data, wherein the third valid data comprises third data from a third bus channel; and
the determining unit is further configured to determine the first payload based on the first valid data, the second valid data, and the third valid data, wherein the first payload comprises the first valid data, the padding data, the second valid data, the padding data, and at least a part of the third valid data that are spliced successively.

42. The apparatus according to any one of claims 31 to 41, wherein the encapsulation unit encapsulates the first payload to obtain a first target packet, wherein the first target packet comprises a packet header and a packet tail; and
the sending unit sends the first target packet.

43. The apparatus according to claim 42, wherein the packet header comprises an indication bit that indicates a bit width mode of the first payload, and the first payload has different bit width lengths in different bit width modes.

44. The apparatus according to claim 35 or 36, wherein a bit width of the first channel identifier and a bit width of the second channel identifier are 5 bits.

45. A data transmission apparatus, wherein the apparatus comprises:
an obtaining unit, configured to obtain first valid data, wherein the first valid data comprises first data from a first bus channel;
a determining unit, configured to determine a first payload based on the first valid data and virtual data, wherein the first payload comprises the first valid data, padding data, and the virtual data that are spliced successively, the virtual data comprises a virtual identifier, and the virtual identifier indicates that the virtual data is invalid;
an encapsulation unit, configured to encapsulate the first payload; and
a sending unit, configured to send the encapsulated first payload.

46. A data transmission apparatus, wherein the apparatus comprises:
a receiving unit, configured to receive a first target packet;
a parsing unit, configured to parse the first target packet to obtain a first payload;
a determining unit, configured to determine first valid data and at least a part of second valid data based on the first payload; and
a sending unit, configured to: send the first valid data to a first bus channel corresponding to the first valid data, and send the at least a part of the second valid data to a second bus channel corresponding to the second valid data.

47. The apparatus according to claim 46, wherein the determining unit is further configured to:
split the first payload based on an alignment bit width to obtain the first valid data, padding data, and the at least a part of the second valid data.

48. The apparatus according to claim 45, wherein a sum of a bit width of the first valid data and a bit width of the padding data is equal to an integer multiple of the alignment bit width.

49. The apparatus according to claim 47 or 48, wherein the bit width of the padding data is less than the alignment bit width.

50. The apparatus according to any one of claims 47 to 49, wherein the alignment bit width is equal to 8 bits (bits), 16 bits, 32 bits, 64 bits, or 128 bits.

51. The apparatus according to any one of claims 47 to 50, wherein the first valid data comprises a first channel identifier and first data, and the at least a part of the second valid data comprises a second channel identifier and at least a part of second data, wherein the first channel identifier indicates the first bus channel, and the second channel identifier indicates the second bus channel.

52. The apparatus according to claim 51, wherein the determining unit is further configured to:
determine sending priorities of the first valid data and the at least a part of the second valid data based on the first channel identifier and the second channel identifier.

53. The apparatus according to claim 51 or 52, wherein both a bit width of the first channel identifier and a bit width of the second channel identifier are 4 bits.

54. The apparatus according to any one of claims 51 to 53, wherein the apparatus further comprises a deletion unit, and the deletion unit is configured to:
delete the first channel identifier in the first valid data and the second channel identifier in the at least a part of the second valid data.

55. The apparatus according to any one of claims 46 to 54, wherein
if the at least a part of the second valid data is a part of the second valid data, the receiving unit is further configured to: receive and parse a second target packet to obtain a second payload;
the determining unit is further configured to determine remaining data in the second valid data other than the part of the second valid data based on the second payload;
the determining unit is further configured to determine the second valid data based on the remaining data and the part of the second valid data; and
the sending unit is further configured to send the second valid data.

56. The apparatus according to any one of claims 46 to 55, wherein
the determining unit is further configured to determine the first valid data, the second valid data, and at least a part of third valid data based on the first payload; and
the sending unit is further configured to: send the first valid data to the first bus channel corresponding to the first valid data, send the second valid data to the second bus channel corresponding to the second valid data, and send the at least a part of the third valid data to a third bus channel corresponding to the third valid data.

57. The apparatus according to any one of claims 46 to 56, wherein the target packet comprises a packet header and a packet tail.

58. The apparatus according to claim 57, wherein the parsing unit is further configured to obtain an indication bit from the packet header, wherein the indication bit indicates a bit width mode of the first payload, and the first payload has different bit width lengths in different bit width modes.

59. The apparatus according to claim 51 or 52, wherein both a bit width of the first channel identifier and a bit width of the second channel identifier are 5 bits.

60. A data transmission apparatus, wherein the apparatus comprises:
a receiving unit, configured to: receive and parse a first target packet to obtain a first payload;
a determining unit, configured to determine first valid data based on the first payload, wherein the first payload comprises the first valid data, padding data, and virtual data, the virtual data comprises a virtual identifier, and the virtual identifier indicates that the virtual data is invalid; and
a sending unit, configured to send the first valid data to a first bus channel corresponding to the first valid data.

61. A system on chip, wherein the system on chip comprises a plurality of dies that are coupled to each other, the plurality of dies comprise a first die and a second die, the first die is configured to perform the data transmission method according to any one of claims 1 to 14, or the first die is configured to perform the data transmission method according to claim 15; and the second die is configured to perform the data transmission method according to any one of claims 16 to 27, or the second die is configured to perform the data transmission method according to claim 30.
